# EUROPEAN PATENT APPLICATION

(11) **EP 3 858 883 A1**
(43) Date of publication of application: **04.08.2021**
(21) Application number: 19866755.2
(22) Date of filing: 27.09.2019
(51) Int. Cl.: C08G 18/38, C08G 18/24, G02B 1/04, G02C 7/02

(54) **POLYMERIZABLE COMPOSITION FOR OPTICAL MEMBERS**

(30) Priority: 28.09.2018 JP 2018185490
(71) Applicant: Hoya Lens Thailand Ltd., Pathumthani 12130 (TH)
(72) Inventor: KOUSAKA, Masahisa, Tokyo 160-8347 (JP); KAGEYAMA, Yukio, Tokyo 160-8347 (JP)
(74) Representative: Gerauer, Marc Philippé
(86) International application number: PCT/JP2019/038243
(87) International publication number: WO 2020/067465

(57) **Abstract**

[1] A polymerizable composition for an optical component, including a polyisocyanate component, a polythiol component, and a compound represented by formula (1) in an amount of 5 ppm by mass or more and 10,000 ppm by mass or less with respect to the total amount of the polyisocyanate component and the polythiol component, [2] an optical component resin that is a polymerized product of the polymerizable composition according to the above-described [1], [3] a spectacle lens including a lens substrate that is formed of the optical component resin according to the above-described [2], and [4] spectacles including the spectacle lens according to the above-described [3].

## Description

### Technical Field

The present disclosure relates to a polymerizable composition used for an optical component such as a spectacle lens, and an optical component resin, a spectacle lens, and spectacles produced by using the same.

### Background Art

A resin lens is advantageous in that it is lighter than a lens formed of an inorganic material such as inorganic glass, hard to crack, and stainable. Therefore, it is currently the main stream to use a resin lens as an optical component such as a spectacle lens or a camera lens.

As a raw material for a resin lens, a polyurethane-based resin such as thiourethane is used (e.g., Patent Literature 1), and a plastic lens formed of such a polyurethane-based resin is produced, for example, by injecting a mixed solution containing a polymerizable component into a molding die to obtain a molded product (e.g., Patent Literature 2).

Patent Literature 3 describes a method for producing a plastic lens as a plastic lens production method that is practical in terms of productivity and capable of producing a thick plastic lens which is free from optical distortion and a stria. The method is a method for producing a plastic lens including a filling step of filling a forming mold with a polymerizable composition, and a curing step of exposing the forming mold to a particular temperature condition to cure the polymerizable composition, and is characterized in that the curing step includes, after the filling step, a maintaining step of maintaining the temperature of the polymerizable composition at the initial temperature at the beginning of the filling step or higher, and, after the maintaining step, a cooling step of cooling the polymerizable composition.

### Citation List

### Patent Literature

Patent Literature 1: JP 2008-56854 A
Patent Literature 2: JP 2001-353734 A
Patent Literature 3: JP 2009-226742 A

### Summary of Invention

### Technical Problem

As disclosed in Patent Literature 3, for example, when the polymerization time is reduced to obtain an optical component that is free from a stria or a cloud, the formation of a stria may be suppressed by optimizing the amount of a catalyst and the polymerization temperature conditions. However, a lot of steps are required for achieving the polymerization conditions.

In addition, in some cases, a lot of striae are still formed under such conditions.

Therefore, an embodiment of the present disclosure relates to a polymerizable composition for an optical component that can reduce the formation of a stria and a cloud, and an optical component resin, a spectacle lens, and spectacles produced by using the same.

### Solution to Problem

The present inventors have found that the above-described problems can be solved by using a specific amount of a compound represented by formula (1) as a catalyst.

That is, an embodiment of the present disclosure relates to the following [1] to [4].
[1] A polymerizable composition for an optical component, including a polyisocyanate component, a polythiol component, and a compound represented by formula (1) in an amount of 5 ppm by mass or more and 10,000 ppm by mass or less with respect to the total amount of the polyisocyanate component and the polythiol component 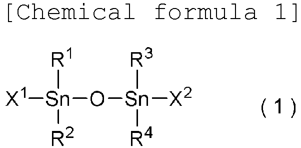 wherein R¹, R², R³, and R⁴ each independently represent a hydrocarbon group, and X¹ and X² are each independently a hydrocarbon group, a hydroxy group, an alkoxy group, or an acyloxy group.
[2] An optical component resin that is a polymerized product of the polymerizable composition according to the above-described [1].
[3] A spectacle lens including a lens substrate that is formed of the optical component resin according to the above-described [2].
[4] Spectacles including the spectacle lens according to the above-described [3].

### Advantageous Effects of Invention

An embodiment of the present disclosure provides a polymerizable composition for an optical component that can reduce the formation of a stria and a cloud, and an optical component resin, a spectacle lens, and spectacles produced by using the same.

### Description of Embodiments

### [Polymerizable composition]

A polymerizable composition according to an embodiment of the present disclosure includes a polyisocyanate component, a polythiol component, and a compound represented by formula (1) (hereinafter, also simply referred to as "compound (1)" in an amount of 5 ppm by mass or more and 10,000 ppm by mass or less with respect to the total amount of the polyisocyanate component and the polythiol component.

With the above configuration, a polymerizable composition for an optical component that can reduce the formation of a stria and a cloud, and an optical component resin, a spectacle lens, and spectacles produced by using the same can be obtained.

### <Compound (1)>

Compound (1) is a compound represented by formula (1) 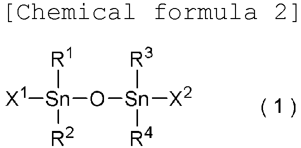 wherein R¹, R², R³, and R⁴ each independently represent a hydrocarbon group, and X¹ and X² are each independently a hydrocarbon group, a hydroxy group, an alkoxy group, or an acyloxy group.

The hydrocarbon groups of R¹, R², R³, R⁴, X¹, and X² each have preferably 1 to 20 carbon atoms, more preferably 2 to 16 carbon atoms, and still more preferably 3 to 12 carbon atoms.

Examples of the hydrocarbon group include an aliphatic hydrocarbon group, an aromatic hydrocarbon group optionally having a substituent having 1 to 3 carbon atoms, and an aliphatic hydrocarbon group having an aromatic hydrocarbon group.

Examples of the aliphatic hydrocarbon group include a methyl group, an ethyl group, a propyl group, a butyl group, and a hexyl group.

Examples of the aromatic hydrocarbon group include a phenyl group, a methylphenyl group, and a naphtyl group.

Examples of the aliphatic hydrocarbon group having an aromatic hydrocarbon group include a benzyl group, a 2-phenylethyl group, and a 2,2-dimethyl-2-phenylethyl group.

Among these hydrocarbon groups, a methyl group, an ethyl group, a butyl group, and a 2,2-dimethyl-2-phenylethyl group are more preferred, and a butyl group and a 2,2-dimethyl-2-phenylethyl group are still more preferred.

The alkoxy groups of X¹ and X² each have preferably 1 to 20 carbon atoms, more preferably 1 to 12 carbon atoms, and still more preferably 1 to 8 carbon atoms.

Examples of the alkoxy group include a methyloxy group, an ethyloxy group, a propyloxy group, and a dodecyloxy group.

Among these alkoxy groups, a dodecyloxy group is preferred.

The acyloxy groups of X¹ and X² each have preferably 2 to 20 carbon atoms, more preferably 2 to 12 carbon atoms, and still more preferably 2 to 8 carbon atoms.

Examples of the acyloxy group of X¹ and X² include an acetoxy group and a propionyloxy group.

Among these acyloxy groups, an acetoxy group is preferred.

Examples of compound (1) include 1,3-diacetoxy-1,1,3,3-tetramethyldistannoxane, 1,3-diacetoxy-1,1,3,3-tetraethyldistannoxane, 1,3-diacetoxy-1,1,3,3-tetrabutyldistannoxane, 1,1,1,3,3,3-hexakis(2,2-dimethyl-2-phenylethyl)-distannoxane, 1,1,3,3-tetrabutyl-1,3-bis(octyloxy)distannoxane, 1,1,3,3-tetrabutyl-1,3-bis(decyloxy)distannoxane, and 1,1,3,3-tetrabutyl-1,3-bis(dodecyloxy)distannoxane.

Among these compounds, from the standpoint of further remarkably reducing the formation of a stria and a cloud, 1,3-diacetoxy-1,1,3,3-tetrabutyldistannoxane, 1,1,1,3,3,3-hexakis(2,2-dimethyl-2-phenylethyl)-distannoxane, and 1,1,3,3-tetrabutyl-1,3-bis(dodecyloxy)distannoxane are preferred, and 1,3-diacetoxy-1,1,3,3-tetrabutyldistannoxane and 1,1,1,3,3,3-hexakis(2,2-dimethyl-2-phenylethyl)-distannoxane are more preferred.

The polymerizable composition contains compound (1) preferably, from the standpoint of further reducing a stria and a cloud, in an amount of 5 ppm by mass or more and 10,000 ppm by mass or less, more preferably 50 ppm by mass or more and 1,000 ppm by mass or less, and still more preferably 80 ppm by mass or more and 500 ppm by mass or less with respect to the total amount of the polyisocyanate component and the polythiol component.

When the polyisocyanate component contains 1,3-bis(isocyanatomethyl)benzene, and the polythiol component contains a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, the polymerizable composition contains compound (1) preferably, from the standpoint of further reducing a stria and a cloud, in an amount of 5 ppm by mass or more and 1,000 ppm by mass or less, more preferably 30 ppm by mass or more and 800 ppm by mass or less, still more preferably 50 ppm by mass or more and 500 ppm by mass or less, and even more preferably 80 ppm by mass or more and 300 ppm by mass or less with respect to the total amount of the polyisocyanate component and the polythiol component.

When the polyisocyanate component contains a mixture of 2,5-bis(isocyanatomethyl)-bicyclo[2.2.1]heptane and 2,6-bis(isocyanatomethyl)-bicyclo[2.2.1]heptane, and the polythiol component contains 4-mercaptomethyl-1,8-dimercapto-3,6-dithiaoctane and pentaerythritol tetrakis(3-mercaptopropionate), the polymerizable composition contains compound (1) preferably, from the standpoint of further reducing a stria and a cloud, in an amount of 5 ppm by mass or more and 1,000 ppm by mass or less, more preferably 300 ppm by mass or more and 900 ppm by mass or less, still more preferably 400 ppm by mass or more and 800 ppm by mass or less, and even more preferably 500 ppm by mass or more and 800 ppm by mass or less with respect to the total amount of the polyisocyanate component and the polythiol component.

When the polyisocyanate component contains 1,3-bis(isocyanatomethyl)cyclohexane, and the polythiol component contains 2,5-bis(mercaptomethyl)-1,4-dithiane and pentaerythritol tetrakis(2-mercaptoacetate), the polymerizable composition contains compound (1) preferably, from the standpoint of further reducing a stria and a cloud, in an amount of 5 ppm by mass or more and 10,000 ppm by mass or less, more preferably 300 ppm by mass or more and 9,000 ppm by mass or less, still more preferably 1,000 ppm by mass or more and 9,000 ppm by mass or less, even more preferably 3,000 ppm by mass or more and 9,000 ppm by mass or less with respect to the total amount of the polyisocyanate component and the polythiol component, with respect to the polymerizable composition.

### <Polyisocyanate component>

Examples of the polyisocyanate component include a polyisocyanate compound having an aromatic ring, an alicyclic polyisocyanate compound, and a linear or branched aliphatic polyisocyanate compound.

Examples of the polyisocyanate compound having an aromatic ring include diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenyl isocyanate), 4,4'-methylenebis(2-methylphenyl isocyanate), bibenzyl-4,4'-diisocyanate, bis(isocyanatophenyl)ethylene, 1,3-bis(isocyanatomethyl)benzene, 1,4-bis(isocyanatomethyl)benzene, 1,3-bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethylphenyl) ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methyloxy-4-isocyanatophenyl) disulfide, and bis(4-methyloxy-3-isocyanatophenyl) disulfide.

Examples of the alicyclic polyisocyanate compound include 1,3-diisocyanatocyclohexane, isophorone diisocyanate, 1,3-bis(isocyanatomethyl)cyclohexane, 1,4-bis(isocyanatomethyl)cyclohexane, dicyclohexylmethane-4,4'-diisocyanate, 2,5-bis(isocyanatomethyl)-bicyclo[2.2.1]heptane, 2,6-bis(isocyanatomethyl)-bicyclo[2.2.1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane.

Examples of the linear or branched aliphatic polyisocyanate compound include hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris (isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octane diisocyanate, 1,2-diisothiocyanatoethane, and 1,6-diisothiocyanatohexane.

These compounds may be used alone or in combination of two or more.

The polyisocyanate component preferably contains at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate,
more preferably at least one selected from the group consisting of 1,3-bis(isocyanatomethyl)benzene, hexamethylene diisocyanate, and 1,3-bis(isocyanatomethyl)cyclohexane, and
still more preferably 1,3-bis(isocyanatomethyl)benzene.

The polyisocyanate component contains the above-described preferred polyisocyanate component in an amount of preferably 50% by mass or more, more preferably 70% by mass or more, still more preferably 90% by mass or more, and even more preferably 95% by mass or more, and 100% by mass or less.

### <Polythiol component>

Examples of the polythiol component include an ester compound of a polyol compound and a mercapto group-containing carboxylic acid compound, a linear or branched aliphatic polythiol compound, a polythiol compound having an alicyclic structure, and an aromatic polythiol compound.

In the ester compound of a polyol compound and a mercapto group-containing carboxylic acid compound, examples of the polyol compound include a compound having two or more hydroxy groups in the molecule.

Examples of the polyol compound include ethylene glycol, diethylene glycol, propanediol, propanetriol, butanediol, trimethylolpropane, bis(2-hydroxyethyl) disulfide, pentaerythritol, and dipentaerythritol. Examples of the mercapto group-containing carboxylic acid compound include thioglycolic acid, mercaptopropionic acid, a thiolactic acid compound, and thiosalicylic acid.

Examples of the ester compound of a polyol compound and a mercapto group-containing carboxylic acid compound include ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), dipentaerythritol hexakis(2-mercaptoacetate), and dipentaerythritol hexakis(3-mercaptopropionate).

Examples of the linear or branched aliphatic polythiol compound include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, 2-(2-mercaptoethylthio)propane-1,3-dithiol, 2,2-bis(mercaptomethyl)-1,3-propanedithiol, bis(mercaptomethylthio)methane, tris(mercaptomethylthio)methane, bis(2-mercaptoethylthio)methane, 1,2-bis(mercaptomethylthio)ethane, 1,2-bis(2-mercaptoethylthio)ethane, 1,3-bis(mercaptomethylthio)propane, 1,3-bis(2-mercaptoethylthio)propane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethyl) ether, bis(2-mercaptoethyl) sulfide, bis(2-mercaptoethyl) disulfide, bis(2-mercaptoethylthio)-3-mercaptopropane, 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

Examples of the polythiol compound having an alicyclic structure include 1,1-cyclohexanedithiol, 1,2-cyclohexanedithiol, methylcyclohexanedithiol, bis(mercaptomethyl)cyclohexane, 2-(2,2-bis(mercaptomethylthio)ethyl)-1,3-dithietane, 2,5-bis(mercaptomethyl)-1,4-dithiane, and 4,8-bis(mercaptomethyl)-1,3-dithiane.

Examples of the aromatic polythiol compound include 1,3-dimercaptobenzene, 1,4-dimercaptobenzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptoethyl)benzene, 4,4'-dimercaptobiphenyl, 4,4'-dimercaptobibenzyl, 2,5-toluenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methyloxyphenyl)propane-2,2-dithiol, 1,3-diphenylpropane-2,2-dithiol, phenylmethane-1,1-dithiol, and 2,4-di(p-mercaptophenyl)pentane.

These compounds may be used alone or in combination of two or more.

The polythiol component preferably contains at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate),
more preferably contains at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate) ,
still more preferably contains at least one selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, and
even more preferably contains a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol.

The polythiol component contains the above-described preferred polythiol component in an amount of preferably 50% by mass or more, more preferably 70% by mass or more, still more preferably 90% by mass or more, and even more preferably 95% by mass or more, and 100% by mass or less.

The equivalent ratio between mercapto groups of the polythiol component and isocyanato groups of the polyisocyanate component (mercapto group/isocyanato group) is preferably 40/60 or more, more preferably 43/57 or more, and still more preferably 45/55 or more, and preferably 60/40 or less, more preferably 55/45 or less, and still more preferably 53/47 or less.

The total amount of the polythiol component and the polyisocyanate component contained in the polymerizable composition is preferably 80% by mass or more, more preferably 90% by mass or more, and still more preferably 95% by mass or more, and 100% by mass or less.

Examples of a preferred combination of the polyisocyanate component and the polythiol component in the polymerizable composition include:
(i) 1,3-bis(isocyanatomethyl)benzene, and a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol,
(ii) a mixture of 2,5-bis(isocyanatomethyl)-bicyclo[2.2.1]heptane and 2,6-bis(isocyanatomethyl)-bicyclo[2.2.1]heptane, and 4-mercaptomethyl-1,8-dimercapto-3,6-dithiaoctane and pentaerythritol tetrakis(3-mercaptopropionate), and
(iii) 1,3-bis(isocyanatomethyl)cyclohexane, and 2,5-bis(mercaptomethyl)-1,4-dithiane and pentaerythritol tetrakis(2-mercaptoacetate) .

### <Release agent>

The polymerizable composition preferably contains a release agent.

Examples of the release agent include an acidic phosphate such as an acidic alkyl phosphate. The number of carbon atoms in an alkyl group of the acidic alkyl phosphate is preferably 1 or more and more preferably 4 or more, and preferably 20 or less and more preferably 12 or less.

The acidic phosphate may be either a phosphoric monoester or a phosphoric diester. A mixture of a phosphoric monoester and a phosphoric diester is preferred.

Examples of the acidic alkyl phosphate include isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate, butylphenyl acid phosphate, and butoxyethyl acid phosphate.

The release agent is added preferably in an amount of 0.01 parts by mass or more, more preferably 0.05 parts by mass or more, still more preferably 0.08 parts by mass or more, and preferably 1.00 parts by mass or less, more preferably 0.50 parts by mass or less, and still more preferably 0.30 parts by mass or less with respect to 100 parts by mass of the total amount of the polyisocyanate component and the polythiol component.

### <Ultraviolet absorber>

The polymerizable composition preferably contains an ultraviolet absorber.

Examples of the ultraviolet absorber include a benzotriazole-based compound, a benzophenone-based compound, dibenzoylmethane, and a dibenzoylmethane-based compound. Among these compounds, the benzotriazole-based compound or the benzophenone-based compound is preferred.

Examples of the benzotriazole-based compound include 2-(2-hydroxy-5-methylphenyl)-2H-benzotriazole, 2-(2-hydroxy-3,5-di-tert-butylphenyl)-5-chloro-2H-benzotriazole, 2-(3-tert-butyl-2-hydroxy-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-octylphenyl)-2H-benzotriazole, 2-(2-hydroxy-4-ethyloxyphenyl)-2H-benzotriazole, 2-(2-hydroxy-4-propyloxyphenyl)-2H-benzotriazole, 2-(2-hydroxy-4-octyloxyphenyl)-2H-benzotriazole, and 2-(2-hydroxy-4-octyloxyphenyl)-5-chloro-2H-benzotriazole.

Examples of the benzophenone-based compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.

Examples of the dibenzoylmethane-based compound include 4-tert-butyl-4'-methoxydibenzoylmethane.

These compounds may be used alone or in combination of two or more.

The ultraviolet absorber is added preferably in an amount of 0.01 parts by mass or more, more preferably 0.10 parts by mass or more, still more preferably 0.30 parts by mass or more, and even more preferably 0.40 parts by mass or more, and preferably 5 parts by mass or less, more preferably 3 parts by mass or less, and still more preferably 2 parts by mass or less with respect to 100 parts by mass of the total amount of the polyisocyanate component and the polythiol component.

The polymerizable composition may contain, for example, other additives such as an antioxidant, a coloring inhibitor, and a fluorescent whitening agent. These additives may be used alone or in combination of two or more.

From the standpoint of productivity, the polymerizable composition may have, for example, a moisture content of 1 ppm by mass or more, 10 ppm by mass or more, 100 ppm by mass or more, 200 ppm by mass or more, 400 ppm by mass or more, and 600 ppm by mass or more with respect to the amount of the polymerizable composition.

From the standpoint of reducing the formation of a stria and a cloud, a polymerizable composition having a smaller moisture content is more preferred. The moisture content is preferably 3,000 ppm by mass or less, more preferably 2,000 ppm by mass or less, and still more preferably 1,000 ppm by mass or less with respect to the total amount of the polymerizable composition.

The moisture content of the polymerizable composition is measured by a method as described in Examples.

The polymerizable composition can be obtained by mixing the above-described components.

The polymerizable composition may be disposed, from the standpoint of further reducing the formation of a stria and a cloud, under a reduced pressure condition.

The pressure of the reduced pressure condition is preferably 10 Pa or more, more preferably 50 Pa or more, and still more preferably 100 Pa or more, and preferably 1000 Pa or less, more preferably 800 Pa or less, and still more preferably 500 Pa or less.

An optical component resin according to an embodiment of the present disclosure is a polymerized product of the above-described polymerizable composition. In the resin, the formation of a stria and a cloud is reduced.

### [Method for producing optical component such as spectacle lens]

The method for producing an optical component according to an embodiment of the present disclosure is described in more detail below.

The method for producing an optical component according to an embodiment of the present disclosure includes, for example,
a step of injecting the above-described polymerizable composition into a molding die (hereinafter, also referred to as "injection step"), and
a step of polymerizing the polymerizable composition (hereinafter, also referred to as "polymerization step").

### <Injection step>

In the injection step, for example, the obtained polymerizable composition is injected into a molding die.

When a spectacle lens is produced as an optical component, for example, a molding die including a pair of molds that form both of two main surfaces of the spectacle lens, and a tape or a gasket for fixing these molds with a gap is used. The above-described mold may be formed of glass or metal.

The above-described polymerizable composition is suitable for producing a thick optical component, in which the formation of a stria more readily occur.

The maximum thickness in the molding die is preferably 5 to 30 mm, more preferably 5 to 25 mm, still more preferably 5 to 20 mm, even more preferably 6 to 20 mm, and further more preferably 10 to 20 mm.

The term "maximum thickness in a molding die" refers to a thickness at a portion where the gap is largest in the molding die (mold). The term "maximum thickness in a molding die" refers to, for example, the largest distance between a pair of molds that form two main surfaces.

The above-described polymerizable composition can prevent the formation of a stria even when a molding die having a maximum thickness of 5 mm or more, in which the formation of a stria more readily occur, is used.

Prior to injection into a molding die, the polymerizable composition may be filtrated. The filtration method is not particularly limited. For example, the polymerizable composition may be filtrated using a filter having a pore size of 1 to 30 µm.

### <Polymerization step>

In the polymerization step, for example, the polymerizable composition is polymerized by heating.

Polymerization conditions can be appropriately set depending on the polymerizable composition and the shape of an optical component to be formed.

The polymerization initiation temperature is usually 0 to 50°C, and preferably 5 to 30°C. It is preferred that the temperature is raised from the polymerization initiation temperature, and then heating is preferably performed to perform curing formation. For example, the maximum temperature after the temperature being raised is 110 to 130°C.

Polymerization time, which is time from initiation of polymerization until completion of the polymerization, is, for example, 1 to 96 hours, preferably 2 to 50 hours, more preferably 2 to 26 hours, still more preferably 2 to 14 hours, even more preferably 2 to 8 hours, and further more preferably 2 to 5 hours.

After completion of the polymerization, the optical component may be released from a die and may be annealed. The temperature of the annealing treatment is preferably 100 to 150°C.

By the above-described method, an optical component resin is obtained.

### [Optical component such as spectacle lens]

Examples of the optical component include a spectacle lens, a camera lens, a prism, an optical fiber, a recording medium substrate used for an optical disc or a magnetic disk, and an optical filter attached to a display of a computer. Among these, the spectacle lens is preferred.

The spectacle lens preferably includes, from the standpoint of reducing the formation of a stria and a cloud, a lens substrate formed of the above-described optical component resin (hereinafter, also referred to as "spectacle lens substrate").

The surface shape of the spectacle lens substrate is not particularly limited, and may be any of a flat surface, a convex surface, a concave surface, or the like.

The spectacle lens substrate may be any of a single focus lens, a multifocal lens, a progressive addition lens, or the like. For example, in an exemplary progressive addition lens, usually, a near portion area (near portion) and a corridor area (intermediate area) are included in a lower area, and a distance portion area (distance portion) is included in an upper area.

The spectacle lens substrate may be a finish type spectacle lens substrate or a semi finish type spectacle lens substrate.

The thickness of the geometrical center and the diameter of the spectacle lens substrate are not particularly limited. However, the thickness of the geometrical center is usually about 0.8 to 30 mm, and the diameter is usually about 50 to 100 mm.

The refractive index (nₑ) of the spectacle lens substrate is, for example, 1.53 or more, 1.55 or more, 1.58 or more, and 1.60 or more, and, for example, 1.75 or less and 1.70 or less.

The spectacle lens preferably includes a spectacle lens substrate and a functional layer on a surface of the spectacle lens substrate.

Examples of the functional layer include at least one selected from the group consisting of a hard coat layer, a primer layer, an antireflection film, and a water repellent film.

The hard coat layer is disposed for improving scratch resistance, and preferably can be formed by applying a coating solution containing a fine particulate inorganic material such as an organic silicon compound, tin oxide, silicon oxide, zirconium oxide, or titanium oxide.

The primer layer is disposed for improving impact resistance, and contains, for example, polyurethane as a main component. Here, the content of polyurethane in the primer layer is preferably 50% by mass or more.

Examples of the antireflection film include a layered film of inorganic substances such as silicon oxide, titanium dioxide, zirconium oxide, and tantalum oxide.

The water repellent film can be formed using an organic silicon compound containing a fluorine atom.

### [Spectacles]

Spectacles according to an embodiment of the present disclosure include a spectacle lens and a frame in which the spectacle lens is mounted.

The frame includes, for example, a pair of rims, a bridge disposed between the rims, and a pair of temples each disposed at one end of each of the rims.

The rims may be half rims.

The frame may be a so-called rimless frame. In this case, the spectacles include, for example, a pair of spectacle lenses, a bridge disposed between the spectacle lenses, and a pair of temples each disposed at one end of each of the spectacle lenses.

### Examples

Hereinafter, embodiments of the present disclosure will be described using specific examples, but claims of the present invention are not limited by the following examples. Operations and evaluations described below are performed in the atmosphere at room temperature (ca. 20 to 25°C), unless otherwise indicated. The expressions "%" and "part" in the following examples refer to "% by mass" and "part by mass", respectively, unless otherwise indicated.

### [Measuring method]

### <Moisture content>

In a glove box under conditions at a temperature of 25°C and a relative humidity of 6% or less, a Karl Fischer moisture meter "MKC-610" (Kyoto Electronics Manufacturing Co., Ltd.) connected to a moisture vaporizer "ADP-611" (manufactured by Kyoto Electronics Manufacturing Co., Ltd.) was disposed. The moisture vaporizer and the Karl Fischer moisture meter were operated without introducing any measurement sample at a temperature of 125°C for 20 minutes to stabilize the vaporizer while the value indicated by the Karl Fischer moisture meter was monitored.

Next, a tray on which no measurement sample was set was introduced into the moisture vaporizer, and the moisture content was measured for 20 minutes to obtain a blank value.

Subsequently, a tray on which a measurement sample was set was introduced into the moisture vaporizer, and the moisture content was measured for 20 minutes to obtain a moisture content measurement value of the measurement sample.

The moisture content of a measurement sample was calculated using the following formula.

Moisture content (ppm by mass) = [Moisture content measurement value of measurement material - blank value]/amount of measurement sample introduced]

### [Evaluating method]

### <Stria>

A projection test was performed using a light source system "Optical ModuleX SX-UI251HQ" (manufactured by USHIO INC.). A high-pressure UV lamp "USH-102D" (manufactured by USHIO INC.) was used as a light source, a white screen was disposed at a distance of 1 m from the light source, and an optical component test sample was disposed between the light source and the screen to obtain an image projected on the screen. The projected image on the screen was observed and evaluated according to the following criteria.
A: No linear irregularity is present in the projected image.
B: A very faint linear irregularity is present in the projected image.
C: A faint linear irregularity is present in the projected image.
D: A dense linear irregularity is present in the projected image. (Failed)
E: A severe linear irregularity is present in the projected image. (Failed)

### <Cloud>

In a black box, an area of a spectacle lens substrate around the geometrical center within a diameter of 30 mm was visually observed under illumination with fluorescent lamps, and the appearance was evaluated according to the following criteria.
A: No cloud is present in the resin.
B: A very faint cloud is present in the resin.
C: A faint cloud is present in the resin.
D: A dense cloud is present in the resin. (Failed)

### Example 1

As a polyisocyanate component, 50.5 parts by mass of 1,3-bis(isocyanatomethyl)benzene, 0.10 parts by mass of a release agent "JP-506H" (manufactured by Johoku Chemical Co., Ltd., butoxyethyl acid phosphate), 1.20 parts by mass of an ultraviolet absorber "SEESORB 701" (manufactured by SHIPRO KASEI KAISHA, LTD.), and 100 ppm by mass, with respect to the total amount of the polyisocyanate component and the polythiol component, of 1,3-diacetoxy-1,1,3,3-tetrabutyldistannoxane as a catalyst were added, and mixed to afford a uniform solution.

Next, to the uniform solution, 49.5 parts by mass of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol as a polythiol component was added, mixed at 5°C to 10°C to afford a uniform solution, and subjected to a degassing treatment at 200 Pa for 1 hour to obtain a polymerizable composition for an optical component.

The moisture content was measured according to the above-described method, and the moisture content of the polymerizable composition was 20 ppm by mass.

The mixed uniform solution was filtrated using a 5.0 µm PTFE (polytetrafluoroethylene) filter.

Next, the filtrate was injected into a mold die for a semi finish type lens (center thickness of 16 mm, edge thickness of 19 mm) constituted by an upper mold having a diameter of 75 mm and a radius of curvature of 68 mm, a lower mold having a radius of curvature of 55 mm, and a tape.

After the injection, the mold die was introduced into an electric furnace, and the temperature was gradually raised from 20°C to 120°C. Then, the composition was polymerized at 120°C for 3 hours. After completion of the polymerization, the mold die was recovered from the electric furnace, and the polymerized product was released from the mold die to obtain a lens substrate.

The resulting lens substrate was then annealed at 120°C for 2 hours.

The above-described evaluations were performed, and the results are shown in Table 1.

### Examples 2 and 3

Lens substrates were produced as in Example 1, except that moisture contents of polymerizable compositions in Examples 2 and 3 were 400 ppm by mass and 800 ppm by mass, respectively. The above-described evaluations were performed, and the results are shown in Table 1.

### Example 4

A lens substrate was produced as in Example 2, except that 175 ppm by mass of 1,1,1,3,3,3-hexakis(2,2-dimethyl-2-phenylethyl)-distannoxane was used as a catalyst instead of the catalyst used in Example 2. The moisture content of a polymerizable composition in this example was 400 ppm by mass. The above-described evaluations were performed, and the results are shown in Table 1.

### Example 5

A lens substrate was produced as in Example 1, except that 50.3 parts by mass of a mixture of 2,5-bis(isocyanatomethyl)-bicyclo[2.2.1]heptane and 2,6-bis(isocyanatomethyl)-bicyclo[2.2.1]heptane was used as a polyisocyanate component, a mixture of 24.2 parts by mass of 4-mercaptomethyl-1,8-dimercapto-3,6-dithiaoctane and 25.5 parts by mass of pentaerythritol tetrakis(3-mercaptopropionate) was used as a polythiol component, and 700 ppm by mass, with respect to the total amount of the polyisocyanate component and the polythiol component, of 1,1,3,3-tetrabutyl-1,3-bis(dodecyloxy)distannoxane was used as a catalyst instead of 100 ppm by mass of 1,3-diacetoxy-1,1,3,3-tetrabutyldistannoxane used in Example 1.

The moisture content was measured according to the above-described method, and the moisture content of a polymerizable composition in this example was 400 ppm by mass. The above-described evaluations were performed, and the results are shown in Table 1.

### Example 6

A lens substrate was produced as in Example 1, except that 52.4 parts by mass of 1,3-bis(isocyanatomethyl)cyclohexane was used as a polyisocyanate component, a mixture of 23.8 parts by mass of 2,5-bis(mercaptomethyl)-1,4-dithiane and 23.8 parts by mass of pentaerythritol tetrakis(2-mercaptoacetate) was used as a polythiol component, and 4000 ppm by mass, with respect to the total amount of the polyisocyanate component and the polythiol component, of 1,3-diacetoxy-1,1,3,3-tetrabutyldistannoxane, which was used as a catalyst in Example 1 in an amount of 100 ppm by mass, was used.

The moisture content was measured according to the above-described method, and the moisture content of a polymerizable composition in this example was 20 ppm by mass. The above-described evaluations were performed, and the results are shown in Table 1.

### Examples 7 and 8

Lens substrates were produced as in Example 6, except that 8000 ppm by mass, with respect to the total amount of the polyisocyanate component and the polythiol component, of 1,1,1,3,3,3-hexakis(2,2-dimethyl-2-phenylethyl)-distannoxane was used as a catalyst instead of 1,3-diacetoxy-1,1,3,3-tetrabutyldistannoxane used in Example 6, and moisture contents of polymerizable compositions in Examples 7 and 8 were 100 ppm by mass and 400 ppm by mass, respectively. The above-described evaluations were performed, and the results are shown in Table 1.

### Comparative Examples 1 and 2

Lenses were produced as in Example 1, except that, as a catalyst, 80 ppm by mass, with respect to the total amount of the polyisocyanate component and the polythiol component, of dimethyl tin dichloride was used (Comparative Example 1), or 100 ppm by mass, with respect to the total amount of the polyisocyanate component and the polythiol component, of dibutyl tin dichloride was used (Comparative Example 2) instead of 100 ppm by mass of 1,3-diacetoxy-1,1,3,3-tetrabutyldistannoxane used as a catalyst in Example 1.

The moisture contents were measured according to the above-described method, and the moisture contents of polymerizable compositions in Comparative Examples 1 and 2 were 400 ppm by mass and 800 ppm by mass, respectively. The above-described evaluations were performed, and the results are shown in Table 1.

### Comparative Example 3

A lens substrate was produced as in Example 5, except that 500 ppm by mass, with respect to the total amount of the polyisocyanate component and the polythiol component, of dimethyl tin dichloride was used instead of 1,1,3,3-tetrabutyl-1,3-bis(dodecyloxy)distannoxane used in Example 5.

The moisture content was measured according to the above-described method, and the moisture content of a polymerizable composition in Comparative Example 3 was 500 ppm by mass. The above-described evaluations were performed, and the results are shown in Table 1.

### Comparative Example 4

A lens substrate was produced as in Example 6, except that 4000 ppm by mass, with respect to the total amount of the polyisocyanate component and the polythiol component, was used as a catalyst instead of 1,3-diacetoxy-1,1,3,3-tetrabutyldistannoxane used in Example 6.

The moisture content was measured according to the above-described method, and the moisture content of a polymerizable composition in Comparative Example 4 was 600 ppm by mass. The above-described evaluations were performed, and the results are shown in Table 1.

### [Table 1]

**Table 1**

| | Polymerizable composition | | | | | Evaluation | |
|---|---|---|---|---|---|---|---|
| | Polyisocyanate component | Polythiol component | Catalyst | | Moisture content (ppm by mass) | Stria | Cloud |
| | | | Type | Amount added (ppm by mass) | | | |
| Example 1 | I-1 | T-4 | C-1 | 100 | 20 | A | A |
| Example 2 | I-1 | T-4 | C-1 | 100 | 400 | A | A |
| Example 3 | I-1 | T-4 | C-1 | 100 | 800 | B | A |
| Example 4 | I-1 | T-4 | C-2 | 175 | 400 | A | A |
| Example 5 | I-2 | T-3/T-5 | C-3 | 700 | 400 | A | A |
| Example 6 | I-3 | T-1/T-2 | C-1 | 4000 | 20 | A | A |
| Example 7 | I-3 | T-1/T-2 | C-2 | 8000 | 100 | B | A |
| Example 8 | I-3 | T-1/T-2 | C-2 | 8000 | 400 | B | A |
| Comparative Example 1 | I-1 | T-4 | C-4 | 80 | 400 | E | C |
| Comparative Example 2 | I-1 | T-4 | C-5 | 100 | 800 | E | C |
| Comparative Example 3 | I-2 | T-3/T-5 | C-4 | 500 | 500 | D | D |
| Comparative Example 4 | I-3 | T-1/T-2 | C-4 | 4000 | 600 | D | D |

I-1: 1,3-bis(isocyanatomethyl)benzene
I-2: A mixture of 2,5-bis(isocyanatomethyl)-bicyclo[2.2.1]heptane and 2,6-bis(isocyanatomethyl)-bicyclo[2.2.1]heptane
I-3: 1,3-bis(isocyanatomethyl)cyclohexane
T-1: 2,5-bis(mercaptomethyl)-1,4-dithiane
T-2: pentaerythritol tetrakis(2-mercaptoacetate)
T-3: 4-mercaptomethyl-1,8-dimercapto-3,6-dithiaoctane
T-4: A mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol
T-5: pentaerythritol tetrakis(3-mercaptopropionate)
C-1: 1,3-diacetoxy-1,1,3,3-tetrabutyldistannoxane
C-2: 1,1,1,3,3,3-hexakis(2,2-dimethyl-2-phenylethyl)-distannoxane
C-3: 1,1,3,3-tetrabutyl-1,3-bis(dodecyloxy)distannoxane
C-4: dimethyl tin dichloride
C-5: dibutyl tin dichloride

As described above, it is understood that, with respect to the polymerizable compositions in Examples, when a specific catalyst was used, the formation of a stria and a cloud was reduced. In any case where the polyisocyanate components and the polythiol components are used, when a specific catalyst is used, the formation of a stria and a cloud can be reduced. In particular, it is understood that when a specific catalyst was used, even in a case where a polymerizable composition having a high moisture content was used, the formation of a stria and a cloud was reduced.

## Claims

1. A polymerizable composition for an optical component, comprising a polyisocyanate component, a polythiol component, and a compound represented by formula (1) in an amount of 5 ppm by mass or more and 10,000 ppm by mass or less with respect to the total amount of the polyisocyanate component and the polythiol component 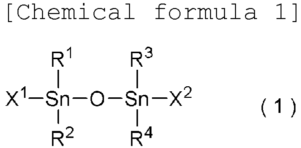 wherein R¹, R², R³, and R⁴ each independently represent a hydrocarbon group, and X¹ and X² are each independently a hydrocarbon group, a hydroxy group, an alkoxy group, or an acyloxy group.

2. The polymerizable composition for an optical component according to claim 1, wherein the compound represented by formula (1) is at least one selected from the group consisting of 1,3-diacetoxy-1,1,3,3-tetrabutyldistannoxane, 1,1,1,3,3,3-hexakis(2,2-dimethyl-2-phenylethyl)-distannoxane, and 1,1,3,3-tetrabutyl-1,3-bis(dodecyloxy)distannoxane.

3. The polymerizable composition for an optical component according to claim 1 or 2, wherein the polythiol component contains at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithiaundecane-1,11-dithiol, 4,8-bis(mercaptomethyl)-3,6,9-trithiaundecane-1,11-dithiol, 5,7-bis(mercaptomethyl)-3,6,9-trithiaundecane-1,11-dithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate).

4. The polymerizable composition for an optical component according to any of claims 1 to 3, wherein the polyisocyanate component contains at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate.

5. The polymerizable composition for an optical component according to any of claims 1 to 4, wherein the total amount of the polyisocyanate component and the polythiol component contained in the polymerizable composition is 80% by mass or more.

6. An optical component resin that is a polymerized product of the polymerizable composition according to any of claims 1 to 5.

7. A spectacle lens comprising a lens substrate formed of the optical component resin according to claim 6.

8. Spectacles comprising the spectacle lens according to claim 7.
